(19) **Europäisches Patentamt / European Patent Office / Office européen des brevets**

(11) **EP 3 948 712 B1**

(12) **FASCICULE DE BREVET EUROPEEN**

(45) Date de publication et mention de la délivrance du brevet:
**06.05.2026 Bulletin 2026/19**

(21) Numéro de dépôt: **20709256.0**

(22) Date de dépôt: **13.03.2020**

(51) Classification Internationale des Brevets (IPC):
**G06Q 40/12** *(2023.01)* **G06Q 10/04** *(2023.01)*
**G06Q 50/06** *(2024.01)*

(52) Classification Coopérative des Brevets (CPC):
**G06Q 50/06; G06Q 10/04; G06Q 40/12**

(86) Numéro de dépôt international:
**PCT/EP2020/056986**

(87) Numéro de publication internationale:
**WO 2020/200709 (08.10.2020 Gazette 2020/41)**

(54) **PROCEDE DE VALIDATION D'UN MULTIFLOT D'AFFECTATION D'ENERGIE OU DE MATIERE ENERGETIQUE**

VERFAHREN ZUR VALIDIERUNG EINER MEHRFACHSTRÖMUNG ZUR ZUORDNUNG VON ENERGIE ODER ENERGIEMATERIAL

METHOD FOR VALIDATING A MULTIPLE FLOW FOR ASSIGNING ENERGY OR ENERGY MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2019 FR 1903324**

(43) Date de publication de la demande:
**09.02.2022 Bulletin 2022/06**

(73) Titulaire: **Volterres**
**75009 Paris (FR)**

(72) Inventeurs:
- **MARCHAND-MAILLET, Davy**
  **69006 Lyon (FR)**
- **SOURD, Francis**
  **92400 Courbevoie (FR)**
- **BOUCLON, Arnaud**
  **92000 Nanterre (FR)**
- **METAIS, Philippe**
  **92190 Meudon (FR)**
- **DE MAINTENANT, Augustin**
  **75018 Paris (FR)**

(74) Mandataire: **Ipsilon**
**12 Avenue d'Italie**
**75013 Paris (FR)**

(56) Documents cités:
**WO-A1-2017/199053    FR-A1- 3 055 048**

- **ANONYMOUS: "La blockchain appliquée à l'énergie / La blockchain, c'est quoi ?", 2 May 2018 (2018-05-02), pages 1 - 18, XP055648862, Retrieved from the Internet <URL:http://www.smartgrids-cre.fr/index.php?rubrique=dossiers&srub=blockchain&action=imprimer> [retrieved on 20191203]**
- **CHRISTOPHE COURTOIS: "Sunchain", 7 March 2018 (2018-03-07), pages 1 - 23, XP055649190, Retrieved from the Internet <URL:https://www.enerplan.asso.fr/medias/publication/3_180307_ppt_sunchain_tecsol.pdf> [retrieved on 20191204]**
- **ANONYMOUS: "Autoconsommation collective", ATELIERS DE LA CRE, 26 September 2017 (2017-09-26), pages 1 - 10, XP055649337, Retrieved from the Internet <URL:https://docplayer.fr/69949203-Autoconsommation-collective.html> [retrieved on 20191204]**

**(Cont. page suivante)**

• ANONYMOUS: "Pourquoi choisir un expert middleware pour son projet blockchain?", 19 April 2018 (2018-04-19), pages 1 - 6, XP055648872, Retrieved from the Internet <URL:https://talium.fr/pourquoi-choisir-un-expert-middleware-pour-son-projet-blockchain/> [retrieved on 20191203]
• VANGULICK DAVID ET AL: "Blockchain for Peer-to-Peer Energy Exchanges: Design and Recommendations", 2018 POWER SYSTEMS COMPUTATION CONFERENCE (PSCC), POWER SYSTEMS COMPUTATION CONFERENCE, 11 June 2018 (2018-06-11), pages 1 - 7, XP033393338, DOI: 10.23919/PSCC.2018.8443042

• STEPHANT MATTHIEU ET AL: "A survey on energy management and blockchain for collective self-consumption", 2018 7TH INTERNATIONAL CONFERENCE ON SYSTEMS AND CONTROL (ICSC), IEEE, 24 October 2018 (2018-10-24), pages 237 - 243, XP033476642, DOI: 10.1109/ICOSC.2018.8587812

**EP 3 948 712 B1**

**Description**

La présente invention concerne les procédés de validation d'un multiflot d'affectation d'énergie ou de matière énergétique.

Dans la suite, par « réseau d'acteurs » on désigne un ensemble de N acteurs, encore appelés nœuds, capables de produire, de consommer ou de stocker de l'énergie, et visés par le multiflot d'affectation. Ces acteurs sont supposés reliés entre eux par un réseau physique de transport et/ou de distribution de l'énergie.

Par « données d'affectation d'énergie » on désigne une valeur virtuelle représentant une quantité d'énergie reçue, produite ou stockée par l'un des acteurs du réseau.

Par « multiflot » on désigne un multiflot dans un graphe temporel, c'est-à-dire une représentation formelle des flux virtuels d'énergie ou de matière énergétique de nature potentiellement différentes entre des nœuds du réseau d'acteurs. Ce multiflot comporte des coefficients qui peuvent être présentés par exemple sous la forme de tables, de graphes valués, de listes de chemins valués.

Par « énergie verte » on désigne une énergie qui a été produite à partir de sources d'énergies renouvelables telles que l'énergie hydraulique, éolienne, solaire, géothermique, houlomotrice ou marémotrice ou encore issue de la biomasse.

Par « matière énergétique verte » on désigne des matières issues de la biomasse.

Par « fournisseur d'énergie verte » on désigne un acteur fournisseur d'énergie ou de matière énergétique qui fournit à ses clients de l'énergie ou des matières énergétiques dont au moins une partie est de l'énergie ou des matières énergétiques vertes.

**Domaine technique**

De plus en plus de consommateurs souhaitent augmenter la part d'énergie verte dans leur consommation énergétique. Pour répondre à ce besoin, ils se fournissent en énergie auprès de fournisseurs se présentant comme des fournisseurs d'énergie verte.

Ce phénomène s'observe également pour les matières énergétiques, comme par exemple le gaz. Les consommateurs cherchant à augmenter la part de matière énergétique issues de la biomasse.

Pour qu'un consommateur puisse déterminer si un fournisseur en énergie verte respecte une qualité de service promise, il doit connaître quelle est la part d'énergie ou de matière énergétique verte dans l'énergie ou la matière énergétique totale reçue. Il peut également vouloir connaître certaines propriétés des sources d'énergie utilisées par ce fournisseur, afin de privilégier par exemple une production locale ou un type de production.

De manière réciproque, il existe un besoin pour certains producteurs d'énergie verte de vérifier la destination de leur production. C'est le cas par exemple de producteurs voulant principalement alimenter des consommateurs situés dans une zone géographique proche. Le rôle d'un fournisseur d'énergie ou matière énergétique est d'acheter tout ou partie de la production d'énergie ou de matière énergétique à des producteurs puis de la revendre à des consommateurs. Une part d'énergie ou matière énergétique transmise au consommateur peut être de l'énergie ou de la matière énergétique verte. Cependant, dans certains pays, la part d'énergie ou de matière énergétique verte n'est pas majoritaire par rapport à la production totale d'énergie ou de matière énergétique. Les fournisseurs d'énergie ou de matière énergétique verte ont donc besoin de certifier que l'énergie qu'ils ont fournie aux consommateurs est bien verte.

**Techniques antérieures**

Les Garanties d'Origine (GO), issues de la Directive européenne 2009/28/CE et définies par l'article R. 314-53 du code de l'énergie, sont des documents électroniques qui servent uniquement à prouver au client final qu'une part ou une quantité déterminée d'énergie a été produite à partir de sources renouvelables ou par cogénération. Les GO sont gérées par l'intermédiaire d'un registre centralisé tenu par une entreprise et ne permettent pas de garantir facilement que la production a eu lieu en même temps que la consommation ni que la production est locale.

La demande WO 2017/199053 porte sur un système permettant à un consommateur final de s'assurer que l'énergie qu'il a achetée est bien verte. Pour atteindre cet objectif, des unités d'énergie sont associées à des tokens d'énergie produits par une blockchain. Un tel système est relativement contraignant et difficile à implémenter à large échelle, avec un grand nombre de producteurs différents.

**Exposé de l'invention**

L'invention vise à proposer un procédé qui permette à un fournisseur d'énergie ou de matière énergétique verte de faire valider par les acteurs d'un réseau, et sans nécessairement faire intervenir un tiers de confiance, que la qualité de service est bien celle promise, et notamment permette de certifier, sur un grand nombre de pas de temps de courtes durées, qu'un fournisseur d'énergie ou matière énergétique verte n'a pas vendu plus d'énergie ou matière énergétique verte qu'il en a acheté.

**Résumé de l'invention**

L'invention atteint ce but grâce à un procédé de validation d'un multiflot d'affectation d'énergie ou de matière énergétique (F), ce multiflot comportant des coefficients correspondant à une quantité d'énergie ou d'une matière énergétique de nature $Q_q$ attribuée à un flux virtuel entre des nœuds $N_i$ et $N_j$ du réseau d'acteurs à différents instants, cette quantité d'énergie ou de matière énergétique ayant été produite, stockée, déstockée et/ou consommée au sein du réseau d'acteurs, ce procédé comprenant les étapes, pour un nœud $N_i$ donné :

- de chiffrement d'au moins les coefficients du multiflot impliquant ce nœud pour obtenir des données chiffrées,
- de publication, par le biais d'un réseau informatique, des données chiffrées de façon à permettre à chaque nœud $N_j$ d'émettre en retour un message de validation certifiant le respect d'une condition prédéfinie entre les données du multiflot F et une valeur réelle de production, de niveau de stock ou de consommation observée au niveau du nœud $N_i$,
- enregistrement, dans une base, des messages de validation envoyés par les nœuds du réseau d'acteurs de façon à permettre la validation des coefficients du multiflot.

L'invention permet de faire valider par les acteurs du réseau que la qualité de service est bien celle promise par le fournisseur d'énergie. Tous les nœuds ne doivent pas nécessairement envoyer un message de validation pour que le multiflot puisse être validé. L'avantage de ce procédé est qu'il est facilement implémentable à large échelle car il ne demande pas d'installation d'appareils dédiés chez les acteurs du réseau, qu'il s'implémente sur une chaine de bloc (en anglais *blockchain*) publique existante et qu'il ne nécessite qu'un nombre limité de transaction dans cette blockchain (par exemple une par jour ou une par mois) indépendamment des quantités d'énergie ou de matière énergétique échangées. De plus, il assure la confidentialité des données de production, consommation, stockage et/ou déstockage des acteurs du réseau.

Ainsi, par exemple, un producteur ou consommateur donné ne saura pas ce qu'un autre producteur ou consommateur a produit, consommé, stocké ou déstocké et réciproquement. La publication des données chiffrées peut se faire par une publication sur un serveur sans restriction d'accès, de sorte que ces données chiffrées sont par exemple accessibles, via internet, du monde entier par quiconque se connecte au serveur.

La publication peut s'effectuer sur un registre distribué, notamment un registre basé sur une chaîne de blocs.

L'étape de publication sur un registre distribué permet d'assurer l'intégrité et l'authenticité du fichier {F}, regroupant les données chiffrées du multiflot d'affectation d'énergie ou de matière énergétique, qui a été validé.

L'accès aux données chiffrées publiées peut être soumise à une restriction d'accès, par exemple l'entrée d'un identifiant et mot de passe et/ou reconnaissance d'adresse IP.

En variante encore, la publication s'effectue par envoi automatique des données chiffrées sur une adresse prédéfinie donnée par l'acteur souhaitant recevoir cette information, par une notification de type PUSH ou par courrier électronique.

L'étape de chiffrement peut être précédée par une étape de calcul du multiflot d'affectation d'énergie ou de matière énergétique F, ce calcul peut s'effectuer par une méthode d'optimisation mathématique, notamment par application d'un algorithme d'optimisation de flux dans les graphes ou, plus généralement, par un algorithme de programmation linéaire ou quadratique, en nombres entiers ou pas, ou par des algorithmes approchés, heuristiques ou méta-heuristiques.

Le calcul du multiflot d'affectation d'énergie ou de matière énergétique permet d'attribuer une valeur à chacun des échanges d'énergie entre les différents nœuds, dans le cas général où les flux d'énergie dans les réseaux physiques ne sont pas précisément connus.

Ce multiflot est calculé de manière à répondre aux demandes des différents acteurs en matière de qualité de service. Les flux répertoriés dans le multiflot ne sont pas nécessairement des flux réels sur le réseau électrique, mais des flux virtuels visant à montrer que la qualité de service recherchée est bien atteinte. Ils doivent cependant être en accord avec les éventuelles observations des flux réels.

Dans les cas où une technologie permet de mesurer l'ensemble des flux réels dans le réseau, le multiflot(F peut être établi à partir de ces mesures sans faire appel à des algorithmes. L'invention permet de valider que les valeurs figurant dans ce multiflot F ne viennent pas contredire celles observées dans la réalité, en particulier les mesures d'énergie consommée ou produite par les différents nœuds, à chaque instant.

Le chiffrement des données du multiflot d'affectation d'énergie ou de matière énergétique est opéré de préférence par une méthode de chiffrement asymétrique.

L'étape de chiffrement asymétrique des données permet d'assurer la confidentialité des données. Elle permet également d'assurer l'unicité de la source de données car celle-ci est visible entièrement, mais de manière chiffrée, par tous les nœuds du réseau.

Chaque nœud du réseau possède de préférence une clé privée et une clé publique. Avantageusement, tous les coefficients du multiflot F sont chiffrés lors de l'étape de chiffrement.

Chiffrer tous les coefficients du multiflot permet d'assurer la confidentialité des données de consommation, production et/ou stockage des nœuds du réseau d'acteurs, chaque nœud $N_i$ n'ayant alors accès qu'aux coefficients qui le concernent et seulement ces coefficients. Les données chiffrées peuvent, en plus des coefficients du multiflot F, comporter des informations concernant la nature de l'énergie stockée et/ou le lieu de production ou de consommation.

L'ajout de champs d'information chiffrés permet d'apporter plus de précision sur l'énergie affectée au consommateur ou au producteur. Ainsi grâce à ces informations supplémentaires, un consommateur peut par exemple vérifier qu'il reçoit une certaine nature d'énergie, par exemple de l'énergie éolienne, ou bien vérifier le lieu de production de cette énergie.

Les données chiffrées peuvent être contenues dans un fichier informatique {F}.

Le fichier {F} est par exemple un fichier au format CSV, JSON ou XML.

Ce fichier {F} est chiffré à l'aide des clés publiques des nœuds du réseau de telle sorte que les nœuds du réseau d'acteurs qui détiennent une clé privée associée à une clé publique puissent le déchiffrer.

Ce fichier {F} contient un ou plusieurs éléments d'information, chaque élément d'information étant relatif à une description partielle du multiflot comprenant par exemple au moins un coefficient du multiflot. Chaque élément d'information est chiffré de manière à ce que le ou les nœuds concernés par les informations puissent déchiffrer l'élément d'information chiffré et que les autres acteurs ne le puissent pas.

Ces éléments d'information contenus dans le fichier {F} peuvent prendre la forme d'une liste ou d'un ensemble de champs, certains étant chiffrés d'autres pouvant ne pas l'être. Ils peuvent être structurés par exemple sous la forme d'une liste, d'un ensemble, d'une table de hachage, d'un objet JSON ou XML.

En particulier un élément d'information peut être un triplet, contenir trois champs, et ne doit être accessible qu'aux deux acteurs $N_i$ et $N_j$.

Le premier contient une clé symétrique secrète k chiffrée à l'aide de la clé publique du nœud $N_i$ du réseau d'acteurs, le second contient la même clé symétrique k chiffrée à l'aide de la clé publique du nœud $N_j$ du réseau d'acteur et le troisième champ est chiffré par la clé symétrique k et contient une description partielle du multiflot F, comme par exemple un coefficient de ce multiflot.

Ce troisième champ peut contenir d'autres informations. A titre d'exemple, il peut contenir des informations relatives à la nature de l'énergie transmise du nœud $N_i$ au nœud $N_j$.

En variante chaque élément d'information peut contenir un nombre de champs supérieur à 3.

En variante chaque élément d'information peut contenir un champ ou deux champs.

Le fichier informatique {F} peut contenir un nombre d'éléments d'information égal au nombre de coefficients du multiflot F.

Le fichier informatique {F} peut contenir un nombre d'éléments d'information inférieur au nombre de coefficients du multiflot F, lesdits éléments d'information correspondant aux coefficients du multiflot F non nuls.

Le fichier informatique {F} peut contenir un nombre d'éléments d'information inférieur au nombre de coefficients du multiflot F, lesdits éléments d'information correspondant aux coefficients du multiflot F non nuls plus au moins un élément d'information correspondant à un coefficient du multiflot F nul.

Cette variante permet de réduire la taille du fichier en cachant ou non le nombre exact de coefficient du multiflot F non nulles. Elle permet également de ne pas dévoiler le nombre d'acteurs participant au procédé de validation.

Les messages de validation reçus peuvent être enregistré sur un dispositif de stockage informatique. Un système de gestion de base de données peut être utilisé dans ce but.

L'étape d'enregistrement d'un message de validation peut être suivie d'une étape de publication de ce message de validation sur un registre distribué notamment un registre basé sur une chaîne de blocs.

Cette publication sur un registre distribué permet d'assurer l'intégrité et l'authenticité de la validation. Elle permet également de conserver un historique des validations, et assure une traçabilité.

Avantageusement tous les nœuds envoient un message de validation.

Dans ces cas-là, la preuve de la validité du multiflot est totale puisque tous les nœuds ont vérifié que les coefficients du multiflot vérifient une condition prédéfinie.

Si tous les nœuds du réseau d'acteurs n'envoient pas un message de validation, alors la validation du multiflot est dite partielle. Une validation partielle peut être suffisante. Avantageusement, chaque nœud $N_i$ du réseau d'acteurs a la possibilité d'émettre son message de validation à tout moment ultérieur à la publication.

En particulier même si un nouveau multiflot d'affectation d'énergie ou de matière énergétique a été publié, il est toujours possible de valider un multiflot publié antérieurement.

Cette caractéristique peut dissuader l'acteur chargé de la publication du multiflot d'en publier un non valide puisque la vérification de la condition prédéfinie peut être faite à tout moment par les nœuds du réseau d'acteurs.

L'invention a encore pour objet un procédé de validation de données d'affectation d'énergie ou d'une matière énergétique en lien avec un nœud $N_i$ d'un réseau d'acteurs, comprenant les étapes de :

- récupération et déchiffrement d'une version chiffrée de données d'un multiflot d'affectation d'énergie ou de matière énergétique entre ce nœud $N_i$ et le ou les autres nœuds du réseau d'acteurs,
- envoi d'un message de validation à un destinataire prédéfini si une condition prédéfinie est respectée entre ces données et au moins une valeur de production, de niveau de stock ou de consommation observée ou mesurée par ce nœud.

Ce procédé est de préférence mis en œuvre par chacun des nœuds du réseau, et leur permet de recevoir de manière confidentielle les coefficients du multiflot d'affectation d'énergie ou de matière énergétique et de vérifier leur validité.

Les nœuds du réseau d'acteurs peuvent observer les valeurs de production, de niveau de stock ou de consommation, par exemple grâce à des compteurs électriques.

Si le multiflot est une table à quatre dimensions i, j, q, et t, le procédé peut comporter le calcul des quantités $V_{iqt}$ d'un produit $Q_q$ virtuellement stockée par le nœud $N_i$ à l'instant t à partir de l'équation :

[Math 1]

$$V_{iq(t-1)} + \sum_{j=0}^{N} F_{jiqt} - \sum_{j=0}^{N} F_{ijqt} = V_{iqt},$$

$F_{ijqt}$ désignant le coefficient du multiflot F représentant la quantité d'énergie ou de matière énergétique du produit $Q_q$ transférée du nœud $N_i$ au nœud $N_j$ entre les instants t-1 et t, ladite condition prédéfinie correspondant au respect des équations suivantes :

[Math 2]

$$\sum_{q} F_{0iqt} \leq P_{it}$$

[Math 3]

$$\sum_{q} F_{i0qt} \leq C_{it}$$

[Math 4]

$$\sum_{q} w_{iq} V_{iqt} \leq K_{it}$$

où $F_{0iqt}$ est la quantité du produit $Q_q$ virtuellement produite par le nœud $N_i$ entre les instants t-1 et t selon le multiflot d'affectation F, $F_{i0qt}$ est la quantité du produit $Q_q$ virtuellement consommée par le nœud $N_i$ entre les instants t-1 et t selon le multiflot d'affectation F, $P_{it}$ et $C_{it}$ sont les valeurs de production et de consommation réelles observées,

[Math 5]

$$\sum_{q} w_{iq} V_{iqt}$$

est le niveau de stock global d'énergie et $K_{it}$ est la capacité de stockage du nœud $N_i$ entre les instants t-1 et t .

Les vérifications par les différents nœuds assurent la validité des valeurs des coefficients du multiflot d'affectation d'énergie ou de matière énergétique F.

La vérification du respect de la condition prédéfinie entre les données reçues et la valeur réelle de production, de niveau de stock ou de consommation observée par ce nœud peut être faite de manière automatique par un outil logiciel. L'utilisation d'un outil logiciel pour vérifier le respect de la condition précitée est préférable, car cela simplifie et automatise la tâche de vérification des nœuds du réseau.

La vérification peut se faire à chaque publication du fichier {F} par exemple. Cette publication a par exemple lieu de façon régulière, sur une base annuelle, mensuelle, hebdomadaire, journalière ou autre.

La vérification peut être manuelle. Toutefois, de préférence, elle est effectuée automatiquement. La vérification, lorsqu'elle est automatique, peut s'effectuer à une fréquence plus élevée, par exemple toutes les heures, si le fichier { F} est publié à cette même fréquence et si les données observées sont accessibles.

L'outil logiciel peut être mis en œuvre par tout type d'ordinateur ou de circuit spécialisé par exemple intégré à une armoire électrique ou de supervision de production ou de consommation.

L'outil logiciel peut s'interfacer avec le ou les équipements permettant aux nœuds de récupérer les données de consommation ou de production réelles observées. L'outil logiciel peut également s'interfacer avec le système informatique d'une entité tierce chargée de la mesure des consommations, productions ou du niveau de stockage des nœuds du réseau. La combinaison de l'outil logiciel avec la ou les sources de données permettant aux nœuds de récupérer les données de consommation ou de production observées simplifie la validation des données pour les nœuds du réseau.

La récupération d'une version chiffrée des coefficients d'un multiflot d'affectation d'énergie ou de matière énergétique entre ce nœud Ni et le ou les autres nœuds du réseau d'acteurs en lien avec ce nœud est suivie d'une vérification de l'authenticité de cette version chiffrée. Cette vérification permet de s'assurer que le fichier récupéré correspond bien à celui qui se trouve dans la chaîne de bloc.

Dans le cas où les nœuds du réseau d'acteurs ne stockent pas d'énergie ou de matière énergétique, l'envoi du message de validation peut être systématique pour les nœuds de production d'énergie uniquement.

Dans le cas où les nœuds du réseau d'acteurs ne stockent pas d'énergie ou de matière énergétique, l'envoi du message de validation peut être systématique pour les nœuds de consommation d'énergie uniquement.

Dans le cas où il n'y a pas de stockage, il est ainsi possible de valider partiellement le multiflot d'affectation d'énergie ou de matière énergétique même si tous les nœuds n'ont pas envoyé un message de validation. Par exemple, soit seuls les nœuds consommateur, soit seuls les nœuds producteur envoient un message de validation. Le fournisseur d'énergie peut donc valider un multiflot d'affectation d'énergie ou de matière énergétique plus simplement. Avantageusement, l'énergie est transportée physiquement entre les nœuds (Ni) du réseau d'acteurs sous forme d'électricité.

Avantageusement, la matière énergétique est du gaz.

## Brève description des dessins

L'invention pourra être mieux comprise à la lecture de la description détaillée qui va suivre, d'exemples de mise en œuvre non limitatifs de celle-ci, et à l'examen du dessin annexé, sur lequel :

[Fig 1] La figure 1 représente un exemple d'interactions entre des acteurs du réseau lors du procédé de validation d'un multiflot d'affectation d'énergie ou de matière énergétique entre les différents nœuds de production, consommation, stockage et/ou déstockage du réseau,

[Fig 2] La figure 2 représente un exemple d'interactions entre les acteurs du réseau lors du procédé de validation d'un multiflot d'affectation d'énergie ou de matière énergétique entre les différents nœuds de production et/ou de consommation du réseau,

[Fig 3] La figure 3 représente des étapes du procédé de validation telles qu'elles peuvent être réalisées par un acteur ayant accès à des données de production, consommation, stockage et/ou déstockage des nœuds du réseau, et

[Fig 4] La figure 4 est un exemple d'interface de l'outil logiciel pouvant être utilisée pour l'opération de validation.

## Description détaillée

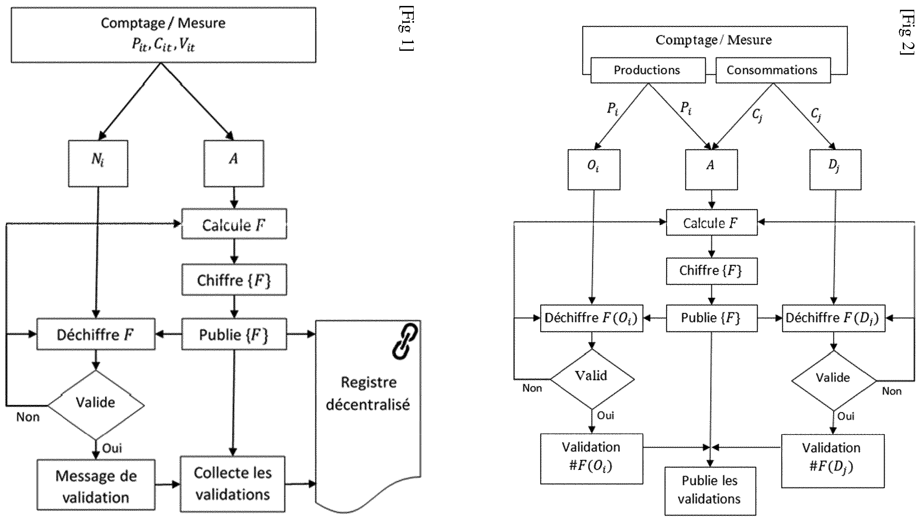

La figure 1 illustre des étapes d'un exemple de mise en œuvre d'un procédé selon l'invention par un acteur A ayant accès à des données de production, de consommation, de stockage ou de déstockage des nœuds d'un réseau d'acteurs.

Cet acteur A est par exemple un fournisseur d'énergie, notamment d'énergie électrique et plus particulièrement un fournisseur d'énergie électrique verte.

Cet acteur A peut également être un fournisseur de matières énergétiques vertes.

Le réseau est composé d'un nombre N de nœuds $N_i$. Chaque nœud $N_i$ peut produire, consommer, stocker et/ou déstocker un produit $Q_q$. On désigne par « produit » la nature de l'électricité ou de la matière énergétique qui est produite.

A titre d'exemple, le produit $Q_q$ peut être de l'électricité éolienne, hydraulique ou nucléaire. La nature de l'électricité produite peut aussi inclure le lieu géographique de production de l'énergie.

$Q_q$ peut également être du gaz issu de la biomasse.

Les nœuds capables de produire de l'énergie sont par exemple des producteurs d'énergie possédant des éoliennes, des panneaux solaires, des barrages hydrauliques ou des centrales nucléaires.

Les nœuds capables de consommer de l'énergie ou de la matière énergétique sont par exemple des consommateurs particuliers ou industriels, qui utilisent l'électricité ou le gaz reçu à des fins domestique ou industrielle. Il peut également s'agir d'entités publiques comme par exemple des infrastructures municipales.

Les nœuds capables de stocker de l'énergie ou de la matière énergétique peuvent être constitués par tout système capable de stocker et déstocker de l'énergie, comme par exemple des systèmes à base de batteries rechargeables, à base d'électrolyseur et de pile à combustible, à stockage par pompage et turbinage, à stockage par compression d'un gaz, etc. Les nœuds $N_i$ disposent de moyens de calcul comme par exemple un ordinateur et d'un moyen d'échanger avec l'acteur A, par exemple via le réseau internet ou tout autre réseau de communication.

Le temps ayant été préalablement discrétisé en instants t, l'intervalle de temps $\Delta_t$ ci-après s'étend entre des instants t-1 et t. La durée de cet intervalle de temps $\Delta_t$ est par exemple d'une demi-heure. Tous les intervalles n'ont pas nécessairement la même durée.

Plusieurs valeurs numériques peuvent être attachées à chaque nœud $N_i$, notamment :

- une production $P_{iqt}$ du produit $Q_q$ pendant l'intervalle $\Delta_t$, cette production peut être nulle
- une production globale $P_{it}$ pendant l'intervalle $\Delta_t$, cette production peut être nulle
- une consommation $C_{iqt}$ du produit $Q_q$ pendant l'intervalle $\Delta_t$, cette consommation peut être nulle
- une consommation globale $C_{it}$ pendant l'intervalle $\Delta_t$, cette consommation peut être nulle
- une capacité de stockage $K_{it}$ pendant l'intervalle $\Delta_t$, cette capacité de stockage peut être nulle s'il n'y a pas de stockage possible ou même infinie si le stockage n'est pas limité
- une quantité $V_{iqt}$ de produit $Q_q$ stockée pendant l'intervalle $\Delta_t$, cette quantité peut être nulle
- une quantité globale $V_{it}$ stockée pendant l'intervalle $\Delta_t$, le coefficient $w_{ig}$ correspondant à un volume unitaire, tous ces coefficients peuvent valoir 1, la quantité $V_{it}$ peut être nulle.

La production globale $P_{it}$ étant :

[Math 6]

$$P_{it} = \sum_q P_{iqt}$$

La consommation globale $C_{it}$ étant :

[Math 7]

$$C_{it} = \sum_q C_{iqt}$$

La quantité globale $V_{it}$ étant :

[Math 8]

$$V_{it} = \sum_q w_{iq} V_{iqt}$$

Ces données de production, de consommation et de stock seront le plus souvent considérées comme confidentielles par le nœud $N_i$. En particulier, elles ne doivent pas être connues des autres nœuds du réseau d'acteurs, ni de tiers extérieur au réseau.

Ces données de production, de consommation et de stock ne sont de manière générale pas nécessairement mesurables, soit parce que le nœud n'est pas équipé des moyens de mesure adapté, soit parce que le produit $Q_q$ ne peut être individuellement identifié.

Par exemple, le nœud $N_i$ peut la plupart du temps mesurer ou faire mesurer sa consommation $C_{it}$ pendant l'intervalle $\Delta_t$ mais il ne peut pas distinguer physiquement l'origine de l'électricité ou de la matière énergétique. Il ne peut donc pas mesurer les valeurs $C_{iqt}$ et connaître la part d'énergie d'origine solaire ou éolienne dans sa consommation.

La mesure d'une quantité observable est également appelée observation.

Une observation peut être exacte, par exemple représentée par un nombre réel ou complexe. Une observation peut être également approchée, par exemple représentée par un intervalle de confiance ou une loi de probabilité.

Les valeurs observables par chaque nœud $N_i$ sont, par exemple :

- la quantité d'énergie globale produite
- la quantité d'énergie globale consommée
- le niveau de stock global.

La quantité d'énergie globale produite étant :

[Math 9]

$$P_{it} = \sum_q P_{iqt}$$

La quantité d'énergie globale consommée étant :

[Math 10]

$$C_{it} = \sum_q C_{iqt}$$

Le niveau de stock global étant :

[Math 11]

$$V_{it} = \sum_q w_{iq} V_{iqt}$$

L'observation des valeurs $V_{iqt}$ peut faire l'objet de différentes variantes. Toutes les valeurs peuvent être connues ou bien certaines valeurs seulement sont connues, par exemple uniquement celles correspondant à certains points de temps, comme par exemple uniquement l'instant 0 et l'instant T.

Les données de production, de consommation et de stock observables peuvent être transmises à A par les acteurs $N_i$ ou par une entité tierce. Cette transmission peut être automatique, et assurée par un réseau de communication, par exemple internet.

L'entité tierce est par exemple un gestionnaire de réseau qui mesure la production des nœuds ou bien une entité qui détient un mandat pour collecter ces données.

Les différents acteurs, et en particulier les acteurs consommateurs, peuvent souhaiter avoir une qualité de service qui garantit le respect de certaines contraintes relatives à la part d'énergie verte qui leur est fournie.

L'acteur A doit être en mesure de prouver cette qualité de service, notamment en montrant que ses approvisionnements en énergie pour chaque intervalle de temps $\Delta_t$ permet effectivement d'alimenter les consommateurs conformément aux indicateurs de qualité de service affichés.

Il utilise pour cela un multiflot, qui est une représentation théorique et formelle des flux virtuels d'énergie entre nœuds de production, de consommation et de stockage d'un réseau d'acteurs.

Cette représentation formelle des flux virtuels d'énergie peut prendre la forme d'une table F d'affectation d'énergie dont les coefficients $F_{ijqt}$ correspondent à une quantité d'énergie ou de matière énergétique d'un produit $Q_q$ attribuée à un flux virtuel entre le nœud source $N_i$ et le nœud destination $N_j$ pendant un intervalle $\Delta_t$, cette quantité d'énergie ayant été par exemple produite, stockée, déstockée ou consommée au sein du réseau d'acteurs.

Le multiflot, dans ce cas, est une table à 4 dimensions.

Cette représentation formelle des flux virtuels d'énergie peut prendre également la forme d'une table d'affectation d'énergie F dont les coefficients $F_{ij}$ correspondent à une quantité d'énergie ou de matière énergétique entre le nœud source $N_i$ et le nœud destination $N_j$, cette quantité d'énergie ou de matière énergétique ayant été par exemple produite, stockée, déstockée ou consommée au sein du réseau d'acteurs.

Le multiflot, dans ce cas, est une table à 2 dimensions.

Cette représentation formelle des flux d'énergie peut également prendre la forme d'une table d'affectation d'énergie F dont les coefficients $F_{ijt}$ correspondent à une quantité d'énergie ou de matière énergétique entre le nœud source $N_i$ et le nœud destination $N_j$ pendant un intervalle $\Delta_t$, cette quantité d'énergie ou de matière énergétique ayant été par exemple produite, stockée, déstockée ou consommée au sein du réseau d'acteurs.

Le multiflot, dans ce cas, est une table à 3 dimensions.

Dans la suite de la description, on considère que le multiflot F est une table à 4 dimensions. Le multiflot d'affectation d'énergie ou de matière énergétique F est tenu de satisfaire plusieurs contraintes modélisant la réalité physique du réseau d'acteurs. Ces contraintes sont par exemple exprimées par des inégalités ou des égalités mathématiques entre les valeurs observables et théoriques.

L'ensemble de ces contraintes est appelé condition prédéfinie de validité du flux.

Soit l'équation suivante :

[Math 12]

$$V_{iq(t-1)} + \sum_{j=0}^{N} F_{jiqt} - \sum_{j=0}^{N} F_{ijqt} = V_{iqt} \quad (1).$$

Par exemple, l'équation (1) traduit la conservation du flux à chaque nœud du réseau et à chaque instant. Dans cette formulation, on a ajouté un nœud supplémentaire $N_0$ pour simplifier les notations. Les nœuds en provenance de $N_0$ correspondent à des productions, les nœuds à destination de $N_0$ correspondent à des consommations.

Lorsque le multiflot d'affectation d'énergie ou de matière énergétique F est donnée, l'équation ci-dessus permet donc de définir les valeurs $V_{iqt}$ puis les valeurs $V_{it}$. Pour que le multiflot F soit valide, il doit en particulier vérifier cette autre inéquation qui traduit le respect des capacités de stockage :

[Math 13]

$$0 \le V_{it} \le K_{it} \quad (2).$$

En particulier, pour les nœuds $N_i$ sans capacité de stockage ($K_{it} = 0$), les volumes stockés $V_{iqt}$ sont tous nuls pour tout t.

Le multiflot d'affectation d'énergie ou de matière énergétique F doit également être en adéquation avec les observations et mesures qui ont été effectuées.

Par exemple, lorsque le flux virtuel représente l'énergie produite par le réseau et consommée par le réseau, il faut s'assurer que le flux virtuel ne dépasse pas les productions $P_{it}$ observées à chaque nœud $N_i$ ce qui se traduit par les inégalités :

[Math 14]

$$\sum_q F_{0iqt} \le P_{it} \quad (3).$$

En autre exemple, il faut s'assurer que le flux virtuel ne dépasse pas les consommation $C_{it}$ observées à chaque nœud $N_i$ ce qui se traduit par les inégalité :

[Math 15]

$$\sum_q F_{i0qt} \le C_{it} \quad (4).$$

La construction du multiflot d'affectation d'énergie F est effectuée à l'étape 11. Elle peut être effectuée par l'acteur A.

Chaque nœud $N_i$ du réseau d'acteur doit ensuite valider ce multiflot F en vérifiant qu'il est compatible avec les contraintes physiques du nœud $N_i$ et en particulier les observations effectuées à ce nœud $N_i$ comme le niveau de stock, la consommation globale ou la production globale.

La construction de ce multiflot F peut s'effectuer par la mise en œuvre d'algorithmes via des moyens de calcul, tel qu'un ordinateur par exemple.

Il existe en général plusieurs multiflots possibles correspondant aux observations effectuées par le réseau d'acteurs. La construction du multiflot consiste donc à trouver au moins un multiflot parmi ceux existant.

Cette construction peut être optimisée en choisissant le multiflot qui satisfait le mieux les exigences de l'acteur A.

L'acteur qui construit le multiflot F souhaite en général construire un multiflot qui a des caractéristiques intéressantes. Par exemple, il veut montrer que les nœuds consommateurs sont alimentés en énergie verte selon un critère de performance prédéfini.

Le critère de performance traduisant par exemple la qualité de service pour les nœuds du réseau d'acteurs, le multiflot peut être construit pour optimiser le critère de performance.

Les algorithmes mis en œuvre pour la construction du multiflot F reposent par exemple sur une méthode d'optimisation mathématique, notamment par application d'un algorithme d'optimisation de flux dans les graphes ou, plus généralement, d'un algorithme de programmation linéaire ou quadratique, en nombres entiers ou pas ou, d'algorithmes approchés, heuristiques ou méta-heuristiques.

Le calcul du multiflot F peut inclure les données mesurées physiquement, comme par exemple des données de production ou de consommation électrique de nœuds, ces données ayant été fournies par les nœuds $N_i$ ou par une entité tierce.

L'acteur A transmet à chaque nœud $N_i$ du réseau d'acteurs différents indicateurs de performance relatifs au multiflot d'affectation d'énergie ou de matière énergétique F, comme par exemple la part d'énergie verte garantie. Ces indicateurs évaluent la qualité de service promise par l'acteur A à chaque nœud $N_i$.

L'indicateur peut également être binaire et indiquer que le multiflot d'affectation d'énergie F satisfait bien certaines contraintes requises par un point source ou destination. Une telle contrainte peut par exemple traduire la volonté d'une centrale d'être alimentée uniquement par une source spécifiée ou un petit nombre de sources spécifiées ou, inversement, de ne pas être alimentée par une source spécifiée ou un petit nombre de sources spécifiées.

Une fois que le multiflot F est construit, il est chiffré lors de l'étape 12, par exemple par le même ordinateur que celui qui l'a calculé, ou par un ordinateur différent.

Lors de l'étape de chiffrement 12 au moins un coefficient du multiflot F est chiffré.

Il est possible de ne pas chiffrer entièrement le multiflot F.

En variante, tous les coefficients du multiflot F sont chiffrés lors de l'étape de chiffrement. Le chiffrement de tous les coefficients du multiflot F assure le respect de la confidentialité des données des nœuds du réseau d'acteurs.

La méthode de chiffrement est, par exemple, une méthode de chiffrement asymétrique.

Une infrastructure à clé publique est avantageusement mise en place pour faciliter la gestion des clés. Cette infrastructure peut comprendre un portail web qui permet aux nœuds de demander la création et la transmission de manière sécurisée, d'une clé privée et d'une clé publique à l'acteur A. Cette application web peut également assurer le stockage sécurisé des clés privée et publique de l'ensemble des acteurs ou uniquement des acteurs qui le souhaitent.

Dans un mode de mise en œuvre du procédé, les valeurs $F_{ijqt}$ sont chiffrées par l'intermédiaire d'une clé symétrique $k_{ijqt}$ accessible uniquement aux nœuds $N_i$ et $N_j$.

Les clés $k_{ijqt}$ doivent avantageusement rester secrètes.

Les clés symétriques $k_{ijqt}$ peuvent être générées aléatoirement pendant la phase de chiffrement.

En variante, elles peuvent avoir été générées au préalable.

En autre variante, des clés générées lors de précédents chiffrements de précédentes instances de F peuvent être réutilisées.

Pour accélérer les calculs et générer moins de clés, cette clé symétrique peut être la même pour tous les produits $Q_q$ ou pour tous les instants t.

Le stockage des clés symétriques se fait avantageusement dans une base de données sécurisée.

On note {F} le fichier issu du chiffrement du multiflot F. Le fichier {F} est un fichier informatique, par exemple un fichier au format CSV, JSON ou XML.

Le fichier {F} contient au moins un élément d'information correspondant à un coefficient $F_{ijqt}$ du multiflot.

En variante, le fichier {F} contient des éléments d'information correspondants aux coefficients $F_{ijqt}$ nécessaires à la description du multiflot F pour au moins un instant t.

Chaque élément d'information du fichier {F} peut correspondre à un ou plusieurs coefficients $F_{ijqt}$.

En particulier, chaque élément d'information du fichier {F} peut être un triplet et correspondre à un coefficient $F_{ijqt}$ du multiflot. Chaque triplet peut avoir la structure suivante :

[Math 16]

$$\left( \begin{array}{c} \{clé = k_{ijqt}\}_{PK(N_i)} \\ \{clé = k_{ijqt}\}_{PK(N_j)} \\ \text{chiffrement}_{k_{ijqt}}\left(produit = Q_q\,;intervalle = t;flux = F_{ijqt}\right) \end{array} \right)$$

Le premier champ d'information, {clé = k$_{ijqt}$}$_{PK(Ni)}$, est accessible uniquement au nœud N$_i$. Il lui permet de savoir que l'information le concerne et d'obtenir la clé symétrique pour déchiffrer le 3$^{ème}$ champ d'information.

Le deuxième champ d'information, {clé = k$_{ijqt}$}$_{PK(Nj)}$, est accessible uniquement au nœud N$_j$. Il lui permet de savoir que l'information le concerne et d'obtenir la clé symétrique pour déchiffrer le 3$^{ème}$ champ d'information.

Le troisième champ d'information est une information, accessible uniquement aux possesseurs de la clé symétrique k$_{ijqt}$, c'est-à-dire N$_i$, N$_j$ et possiblement A si A a archivé la clé symétrique lors du chiffrement.

Les trois champs apparaissent dans {F} comme trois messages chiffrés.

L'utilisation d'une clé symétrique permet d'assurer l'unicité du message contenu dans le champ chiffrement$_{kijqt}$ c'est-à-dire qu'elle permet d'assurer que N$_i$ et N$_j$ ont accès aux mêmes informations.

Le troisième champ chiffrement$_{kijqt}$ peut contenir plusieurs informations. Ces informations permettent en particulier à N$_i$ et à N$_j$ de vérifier quel coefficient du multiflot ils ont déchiffré. Dans l'exemple ci-dessus, la précision du produit Q$_q$ et de l'instant t permet de savoir que la valeur numérique associée au champ flux correspond bien à F$_{ijqt}$.

D'autres informations peuvent être ajoutées dans le troisième champ chiffré. Il peut par exemple y avoir un champ indiquant le lieu de production ou de consommation de l'énergie. De manière alternative, les différentes informations chiffrées dans le troisième champ peuvent être chiffrées indépendamment. Par exemple selon la structure suivante :

[Math 17]

$$\begin{pmatrix} \{clé = k_{ijqt}\}_{PK(N_i)} \\ \{clé = k_{ijqt}\}_{PK(N_j)} \\ \text{chiffrement}_{k_{ijqt}}(produit = Q_q) \\ \text{chiffrement}_{k_{ijqt}}(intervalle = t) \\ \text{chiffrement}_{k_{ijqt}}(flux = F_{ijqt}) \end{pmatrix}$$

L'élément d'information de {F} est alors un quintuplet.

De manière alternative encore, plusieurs coefficients du multiflot F peuvent être présents dans le même élément d'information de {F}. Par exemple, les coefficients correspondant à des instants différents peuvent être regroupés, on a alors la structure suivante :

[Math 18]

$$\begin{pmatrix} \{clé = k_{ijqt}\}_{PK(N_i)} \\ \{clé = k_{ijqt}\}_{PK(N_j)} \\ \text{chiffrement}_{k_{ijqt}}(produit = Q_q ; flux = [F_{ijqt_1}, F_{ijqt_2}, ...]) \end{pmatrix}$$

Le fichier {F} peut contenir un nombre d'éléments d'information égal au nombre de valeurs F$_{ijqt}$ contenues dans le multiflot F.

Le fichier {F} peut contenir uniquement les éléments d'information correspondant aux valeurs F$_{ijqt}$ non nulles. Dans ces conditions le nombre d'éléments d'information est inférieur au nombre de coefficients du multiflot F. Le fichier {F} peut aussi contenir l'ensemble des éléments d'information correspondant aux valeurs F$_{ijqt}$ non nulles plus au moins un élément d'information correspondant à des valeurs F$_{ijqt}$ nulles.

Ces variantes permettent de réduire la taille du fichier en cachant ou non le nombre exact de valeurs F$_{ijqt}$ non nulles.

Ces variantes permettent également de ne pas dévoiler le nombre d'acteurs participant au procédé de validation.

Le fichier {F} peut également contenir un certain nombre d'informations supplémentaires publiques ou non, pour chaque nœud N$_i$. Ces informations peuvent être associées à un identifiant public du nœud N$_i$, comme par exemple sa clé publique PK(N$_i$) ou encore tout identifiant administratif.

Les informations publiques ne sont pas chiffrées. Il s'agit par exemple du nom d'une centrale de production ou de sa puissance de production.

Les informations privées sont chiffrées de manière à ne pouvoir être déchiffrées que par $N_i$, typiquement à l'aide de la clé privée $PK^{-1}(N_i)$. Il s'agit par exemple du nom d'un consommateur ou du numéro d'un contrat entre $N_i$ et A ou du niveau de stock à l'instant initial où F est modélisé.

Les informations contenues dans le fichier {F} peuvent être enregistrées sur une base de données accessible à A.

Après l'étape de chiffrement 12, les données chiffrées issues du chiffrement du multiflot F sont publiées, lors d'une étape de publication 13, par le biais d'un réseau informatique. Par « publiées », il faut comprendre rendues accessibles aux nœuds concernés du réseau et de préférence à tous les nœuds du réseau, ou transmises aux nœuds concernés, voire à tous les nœuds du réseau.

Afin d'avoir l'assurance que le fichier {F} ne sera jamais modifié ni effacé, il peut être publié par un tiers de confiance.

Le fichier {F} peut également être publié dans un registre distribué, par exemple un registre basé sur une chaîne de blocs.

Le registre distribué peut être basé sur une chaîne de blocs (en anglais *blockchain*), publique ou privée.

Pour éviter d'insérer le fichier {F} en entier dans un registre distribué, on peut alternativement utiliser la méthode qui suit, composée de deux étapes. Dans la première étape, un condensat de {F}, produit par exemple par un algorithme de hachage, ou bien encore un code d'authentification du message pour le fichier {F} est calculé. Ce code est par exemple calculé à l'aide d'une fonction de hachage cryptographique, éventuellement en combinaison avec une clé secrète et plus particulièrement la clé secrète de l'acteur A. Dans la seconde étape, le condensat ou le code d'authentification est publié dans le registre distribué. Le fichier {F} est publié par ailleurs. Le condensat ou le code d'authentification de message permet de vérifier d'une part que le fichier n'a pas été modifié (contrôle d'intégrité) et son authenticité. L'avantage de cette méthode est que la taille du condensat ou du code d'authentification est beaucoup plus petite que celle du fichier {F}.

Lorsque le condensat du fichier {F} a été publié dans un registre distribué, tout acteur autorisé peut en vérifier l'authenticité du fichier {F} lorsqu'il le consulte. Pour cela, il compare le condensat du fichier consulté avec le condensat publié dans le registre distribué.

En particulier, les nœuds $N_i$ peuvent effectuer cette vérification comme étape initiale du processus de validation, avant même de déchiffrer {F}.

En déchiffrant dans le fichier {F} toutes les données auquel il a accès, le nœud $N_i$ a accès aux coefficients du multiflot F correspondant au flux entrant dans $N_i$, c'est-à-dire à l'ensemble des coefficients $F_{jiqt}$ avec i fixé et j, q et t variables, et au flux sortant de $N_i$, c'est-à-dire à l'ensemble des coefficients $F_{ijqt}$ avec i fixé et j, q et t variables.

Ainsi, en déchiffrant dans le fichier {F} toutes les données auquel il a accès, le nœud $N_i$ est capable de vérifier que les équations et inéquations impliquant les variables $F_{ijqt}$ vérifient bien les équations et inéquations de production, de consommation et de conservation d'énergie associées à $N_i$.

Le nœud $N_i$ est en particulier capable de vérifier que les observations faites au nœud $N_i$ sont compatibles avec le flux F.

En particulier, $N_i$ peut vérifier les inéquations (3) et (4).

À l'aide des équations (1), le nœud $N_i$ peut calculer les niveaux de stock à différents instants. Le nœud $N_i$ peut donc vérifier qu'ils sont en accord avec ses niveaux de stock observés. En variante, le nœud $N_i$ peut simplement vérifier que les capacités de stockage sont vérifiées, c'est-à-dire que les inéquations (2) sont vérifiées.

Si la vérification se termine par un succès, le nœud $N_i$ émet un message de validation. Ce message de validation est préférentiellement signé, par exemple au moyen de la clé privée $PK^{-1}(N_i)$. Cela permet de prouver qu'il a bien été émis par $N_i$.

Ce message contient au moins la référence à {F} et par exemple le nombre d'éléments d'information vérifiés dans ce fichier.

Le message peut également mentionner le nombre d'éléments d'information validés dans lequel $N_i$ est l'origine et le nombre d'éléments d'information validés dans lequel $N_i$ est la destination.

Ce message de validation est envoyé à l'acteur A qui l'archive lors d'une étape d'enregistrement 14.

La vérification peut être effectuée automatiquement et le message envoyé automatiquement à un équipement de A, par exemple l'ordinateur qui a publié le fichier {F}.

Si la vérification ne se termine pas par un succès, le nœud $N_i$ n'envoie pas de message.

En variante, si la vérification ne se termine pas par un succès, le nœud $N_i$ envoie un message d'erreur, préférentiellement signé.

Ce message, de validation ou d'erreur, est transmis par le biais d'un réseau de télécommunication comme par exemple le réseau internet.

L'acteur A peut publier l'ensemble des messages signés reçus des nœuds $N_i$. Par exemple, la publication se fait sur un registre distribué.

La publication des messages de validation peut également être faite par un autre acteur que A ou par plusieurs acteurs. Cette publication peut être assurée par exemple par un acteur tiers ou un registre distribué ou un ou plusieurs

nœuds $N_i$.

La validation des éléments d'information du fichier {F} par tous les nœuds $N_i$ permet d'assurer que toutes les conditions devant être vérifiées sont bien vérifiées. C'est donc une preuve de la validité du multiflot F.

La validation des éléments d'information de {F} par une partie des nœuds $N_i$ peut suffire pour prouver la validité du multiflot F.

L'acteur A peut avantageusement proposer un outil, par exemple un outil logiciel, aux nœuds $N_i$ pour leur permettre d'envoyer simplement un message de validation où un message d'erreur. Cet outil logiciel peut être accessible par un portail web.

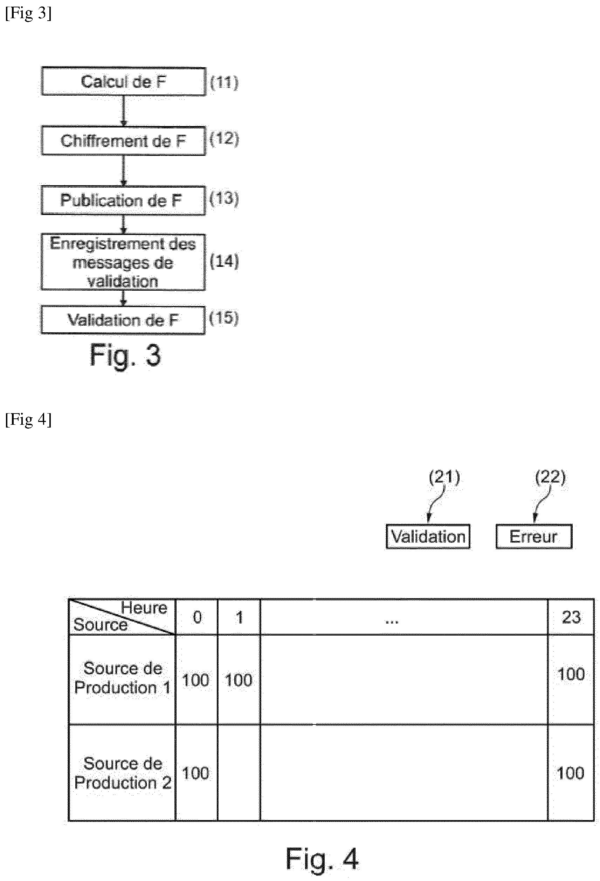

La figure 4 représente un exemple d'interface graphique d'un tel outil logiciel.

Cette interface comprend un tableau 24 présentant les données de consommation heure par heure d'un nœud $N_i$. En variante, les données de consommation peuvent être présentées au pas de temps 5, 10, 15 ou 30 minutes ou tout autre pas de temps correspondant au pas de temps des flux, c'est-à-dire à la durée des intervalles de temps $\Delta_t$.

Cette interface comprend par exemple un bouton de validation 21 qui permet de commander l'envoi d'un message signé. L'utilisateur peut actionner ce bouton 21 lorsqu'il estime que les conditions prédéfinies sont vérifiées.

Un bouton d'erreur 22 permet de commander l'envoi d'un message d'erreur qui invalide le multiflot F. L'utilisateur peut actionner ce bouton 22 lorsqu'il estime que les conditions prédéfinies ne sont pas vérifiées.

Avantageusement, le code source de l'outil informatique est ouvert pour que chaque nœud puisse vérifier la manière dont l'outil informatique réalise la validation.

Pour préserver la confidentialité des données, les codes de l'outil informatique sont exécutés sur une machine appartenant au nœud $N_i$ ou sur une machine administrée par le nœud $N_i$ ou, à défaut, sur une machine qui n'est pas administrée par A.

De manière alternative, ces codes sont exécutés sur un ordinateur appartenant à un tiers de confiance qui aura accès, de préférence de manière sécurisée, aux valeurs de production ou de consommation du nœud $N_i$.

Le code peut être exécuté comme une application web, le code de vérification étant exécuté par le navigateur web du client.

Le code peut avantageusement s'interfacer avec un ou plusieurs outils de stockage de clés privés.

Il peut aussi s'interfacer avec la ou les sources de données permettant aux nœuds de récupérer les données de consommation ou de production réelles observées. Ces sources de données sont par exemple des fichiers de données ou des interfaces de programmation (API). Des saisies manuelles de données sont également possibles.

L'outil peut avantageusement fournir à ses utilisateurs, par exemple les nœuds $N_i$, des services complémentaires pour inciter à l'exécution régulière de l'outil.

De tels services peuvent inclure le stockage, la visualisation et l'analyse des historiques de données de production, de consommation et/ou de stockage.

De manière préférentielle, l'outil s'exécute de manière automatisée et récurrente, en tâche de fond, c'est-à-dire sans que les nœuds $N_i$ aient à l'actionner manuellement.

L'outil peut avantageusement être intégré à l'outil de mesure ou de calcul qui fournit les données de consommation, de production ou de stockage réelles observées.

Au moyen des messages émis par les nœuds $N_i$, l'acteur A peut présenter une preuve de la validité du multiflot F. Cette preuve obtenue est illustrée par l'étape de validation 15 sur la figure 3.

Dans le cas où tous les nœuds ont fourni une validation, l'acteur A peut revendiquer une preuve complète de la validité de son flux F.

Dès lors que A reçoit un message de validation, il a une preuve partielle de la validité du multiflot.

Cette preuve est renforcée, si les messages montrent que chaque élément d'information du fichier {F} a été validé deux fois, une fois par le nœud source du flux virtuel ($N_i$) et une fois par le nœud destination du flux virtuel ($N_j$). Il est suffisant pour cela pour A de montrer que le nombre d'éléments d'information validés est égal à deux fois le nombre de triplets contenus dans {F}.

Les éléments d'information pour lesquels le nœud source est le même que le nœud destination peuvent être validés, de manière conventionnelle, une seule fois ou deux fois, une fois comme source et une fois comme destination.

Dans le cas où tous les nœuds n'ont pas fourni de validation, l'acteur A peut afficher le taux de validation de F.

La possibilité, pour chaque nœud $N_i$ d'effectuer la vérification de {F} dissuade cependant l'acteur A de publier délibérément un multiflot d'affectation d'énergie invalide. Avantageusement, la vérification peut être effectuée à plusieurs reprises et à tout moment ultérieur.

L'acteur A n'a donc pas de solution technique pour effacer une éventuelle erreur. Il doit donc explicitement corriger F et publier une version corrective du fichier {F} qui doit être à son tour validée.

L' acteur A peut avantageusement proposer un outil, par exemple un outil logiciel, permettant d'archiver les cas de non-validité de F détectés par un nœud $N_i$.

La détection d'une invalidité peut provenir d'une erreur de calcul d'un des nœuds $N_i$. L'acteur A peut avantageusement proposer un outil permettant d'analyser la cause de l'invalidation. Une invalidation peut par exemple résulter du fait que le nœud N$_i$ utilise une valeur de consommation ou de production réelle observée erronée ou, en tout état de cause, différente de la valeur connue par l'acteur A.

Cet outil peut avantageusement proposer des fonctionnalités de dialogue permettant d'aboutir soit à la validation du fichier {F} par le nœud N$_i$, soit à la publication par A d'un multiflot corrigé.

Cet outil peut avantageusement être intégré avec l'outil d'aide à l'envoi de messages décrit dans l'étape 14.

Avantageusement, le code source de l'outil informatique est ouvert pour que chaque nœud puisse vérifier la manière dont l'outil informatique fonctionne.

## Contrôle

Le procédé de validation est avantageusement renforcé par des fonctionnalités de contrôle.

Un contrôle donne la possibilité à un tiers de confiance, par exemple un auditeur, qu'on appelle ici acteur C, d'accéder aux données du multiflot d'affectation d'énergie ou de matière énergétique.

Cet acteur C peut être une personne physique ou un logiciel exécuté sur un ordinateur.

Le contrôle permet de vérifier qu'il n'y a pas d'entente entre les acteurs du réseau de distribution d'énergie.

L'accès au fichier chiffré {F} peut être ouvert aux tiers C possédant une clé publique et une clé privée en rajoutant un champ {Clé = k$_{ijqt}$}$_{PK(C)}$ à chacun des éléments d'information du fichier {F}.

La présence de ce champ permet à C d'obtenir la clé symétrique de chaque élément d'information et, par conséquent, de déchiffrer l'ensemble des informations relatives à F$_{ijqt}$. De manière alternative, l'acteur A peut maintenir dans sa base de données privée, l'ensemble des informations P$_{iqt}$, C$_{jqt}$ et F$_{ijqt}$ ainsi que l'ensemble des clés k$_{ijqt}$ et, éventuellement, des informations permettant de faire rapidement le lien entre les lignes de la base de données et les informations chiffrées de {F}.

L'audit de cette base de données permet de contrôler la validité de F et le fait que les informations chiffrées de {F} correspondent bien au contenu de la base de données.

## Exemple : cas sans stockage

La figure 2 illustre un exemple de mise en œuvre du procédé selon l'invention dans le cas où les nœuds ne stockent ni ne déstockent de l'énergie ou de la matière énergétique.

Dans cet exemple, le réseau d'acteurs, précédemment notés N$_i$, est partitionné en deux classes d'acteurs, les nœuds d'origine et les nœud de destination.

Les n nœuds d'origine, notés individuellement O$_i$, possèdent chacun une valeur positive de production P$_{it}$.

Ces nœuds O$_i$ sont par exemple des producteurs d'électricité d'origine renouvelable, ayant une production P$_{it}$ sur un intervalle de temps $\Delta_t$ considéré. Cette capacité peut être une puissance de production, par exemple exprimée en MW, ou bien un volume d'énergie produite, par exemple exprimée en MWh, pendant cet intervalle de temps $\Delta_t$.

Quand t varie, la production P$_{it}$ peut varier. On parle alors de la courbe de production de O$_i$ en fonction du temps.

On a également un ensemble de *m* acteurs constituant des nœuds de destination, notés individuellement D$_j$ et possédant chacun une valeur positive de consommation C$_{jt}$.

Ces nœuds D$_j$ sont par exemple des consommateurs d'électricité souhaitant une énergie d'origine renouvelable, ayant un besoin de consommation C$_{jt}$ sur un intervalle de temps $\Delta t$ considéré. Cette valeur, si elle correspond à une grandeur physique, doit être de même nature que P$_{it}$ et on considère qu'elle est exprimée dans la même unité, éventuellement après conversion.

Quand t varie, la consommation C$_{jt}$ peut varier. On parle alors de la courbe de consommation de D$_j$ en fonction du temps.

En l'absence de stockage, l'origine O$_i$ du multiflot F est facilement connue. Il n'y a donc pas besoin dans notre exemple, de distinguer des multiflot par produit Q$_q$. Le multiflot correspond donc à un flux dans un graphe biparti complet.

Le multiflot est alors une table à 3 dimensions. Le coefficient F$_{ijt}$ correspond au flux d'énergie entre un nœud d'origine O$_i$ et un nœud de destination D$_j$. On parle aussi de table d'affectation à l'instant t.

La table d'affectation contient m*n valeurs par intervalle de temps. Plusieurs de ces valeurs peuvent être nulles.

Ces coefficients d'affectation d'énergie sont des valeurs positives qui doivent obligatoirement satisfaire, pour toute origine O$_i$, toute destination D$_j$ et tout intervalle de temps $\Delta_t$, les deux séries d'inéquations suivantes :

[Math 19]

$$\sum_j F_{ijt} \leq P_{it} \quad (1')$$

[Math 20]

$$\sum_i F_{ijt} \leq C_{jt} \qquad (2')$$

Avec $P_{it}$ et $C_{it}$ les valeurs réelles observables de production et de consommation.

Le multiflot de données d'affectation d'énergie ou de matière énergétique F est valide lorsque les données qui la composent vérifient toutes les inéquations (1') et (2'). Ces inéquations forment la condition prédéfinie de validité du multiflot F.

Les informations contenues dans F sont connues de l'acteur A. Ce dernier peut être à l'origine de la construction du multiflot F.

L'acteur A connaît les valeurs $P_{it}$ et $C_{jt}$ de tous les autres acteurs, et il souhaite assurer la confidentialité de ces données.

Les valeurs $P_{it}$ ont par exemple été fournies à A par $O_i$ ou par une entité tierce qui a mesuré $P_{it}$ et a transmis l'information à A en même temps qu'à $O_i$.

Les valeurs $C_{jt}$ ont par exemple été fournies à A par $D_j$ ou par une entité tierce qui a mesuré $C_{jt}$ et a transmis l'information à A en même temps qu'à $D_j$.

L'entité tierce est par exemple un gestionnaire de réseau qui compte la production d'un producteur et transmet l'information à ses clients producteurs et consommateurs mais aussi aux entités qui détiennent un mandat pour collecter ces données.

Chaque nœud origine $O_i$ souhaite assurer la confidentialité de sa production $P_{it}$.

De même, chaque nœud destination $D_j$ souhaite assurer la confidentialité de sa consommation $C_{jt}$. Cette confidentialité peut faire l'objet de relations contractuelles entre A et les autres acteurs, à savoir les *n* nœuds origine $O_i$ et les *m* nœuds destination $D_j$.

Si l'on considère un coefficient d'affectation $F_{ijt}$ entre un nœud origine $O_i$ et un nœud destination $D_j$, la valeur numérique de ce coefficient d'affectation $F_{ijt}$ est considérée comme une information appartenant à la fois à $O_i$ et à $D_j$. Le nœud origine $O_i$ n'est pas supposé connaître le nœud destination $D_j$ de ce coefficient d'affectation $F_{ijt}$ et, symétriquement, $D_j$ ne connaît pas obligatoirement l'origine $O_i$ de son énergie.

On introduit la possibilité pour l'origine $O_i$ de divulguer une partie des informations qui le concernent à un nœud destination $D_j$. On note $O_{ij}$ l'ensemble de ces informations qui peuvent être codées sous la forme d'une chaine de caractères simple ou de toute autre format comme par exemple XML, JSON, YAML.

De manière similaire, on note $D_{ij}$ l'ensemble des informations concernant $D_j$ que ce nœud souhaite dévoiler à $O_i$.

L'ensemble des informations $O_{ij}$ permet à la destination $D_j$ de calculer des indicateurs de performance sur le multiflot d'affectation d'énergie ou de matière énergétique F.

L'ensemble des informations $D_{ij}$ permet à l'origine $O_i$ de calculer des indicateurs de performance sur le multiflot d'affectation d'énergie ou de matière énergétique F.

Par exemple, si la destination $D_j$ souhaite calculer la part d'énergie qui a une origine solaire, chaque origine $O_i$ telle que $F_{ij} > 0$ doit publier dans $O_{ij}$ l'information si l'énergie produite est d'origine solaire ou pas.

Dans certains cas, il peut être utile de modifier l'information $O_{ij}$ en fonction du temps. On notera alors cette information $O_{ijt}$ dans la suite de la description.

Pareillement, dans certains cas, il peut être utile de modifier l'information $D_{ji}$ en fonction du temps. On notera alors cette information $D_{jit}$ dans la suite de la description.

La possibilité pour les nœuds destination $D_j$ de pouvoir vérifier un indicateur et l'obligation pour les nœuds origine $O_i$ de publier certaines informations peut être fixée contractuellement entre A et chacun des autres acteurs.

Pareillement, la possibilité pour les nœuds origine $O_i$ de pouvoir vérifier un indicateur et l'obligation pour les nœuds destination $D_j$ de publier certaines informations peut être fixée contractuellement entre A et chacun des autres acteurs.

Chaque nœud origine ou destination veut être sûr que les indicateurs transmis par A sont justes et souhaite pour cela pouvoir les recalculer, tout en étant sûr que les données du multiflot d'affectation d'énergie F auxquelles il a accès vérifient bien les inéquations (1') et (2').

Chaque nœud X possède une clé publique PK(X) et une clé privée PK$^{-1}$(X).

L'acteur A rend public un fichier chiffré des données d'affectation d'énergie $F_{ijt}$, noté {F}, basé sur les clés publiques des autres acteurs.

Aucun nœud ne peut déchiffrer totalement les données d'affectation d'énergie chiffrées à l'aide de sa clé privée, mais il peut y retrouver les informations qui le concerne et seulement ces informations.

Une fois le fichier {F} publié, les nœuds ont la possibilité ou l'obligation de valider les informations qui les concernent dans {F}.

L'ensemble des validations permet de prouver la validité de {F}.

Chaque donnée d'affectation d'énergie $F_{ijt}$ est chiffrée au moyen d'une clé symétrique $k_{ijt}$ utilisable avec un algorithme de chiffrement et de déchiffrement. Cette clé n'est pas dévoilée. Elle peut seulement être connue de l'acteur A qui se charge du chiffrement du flux.

Le chiffrement de chaque coefficient $F_{ijt}$ correspond ici à la production d'un triplet d'informations contenant les champs suivants :

- {Clé = $k_{ijt}$}$_{PK(Oi)}$ : cette information accessible uniquement à l'origine $O_i$ lui permet d'une part de savoir que le coefficient le concerne et d'obtenir la clé symétrique pour déchiffrer le 3ème champ d'informations.
- {Clé = $k_{ijt}$}$_{PK(Dj)}$ : cette information accessible uniquement à la destination $D_j$ lui permet d'une part de savoir que le coefficient le concerne et d'obtenir la clé symétrique pour déchiffrer le 3ème champ d'informations.
- L'information du troisième champ est accessible uniquement aux possesseurs de la clé symétrique $k_{ijt}$, c'est-à-dire $O_i$, $D_j$ et possiblement A, il donne les informations sur le coefficient. L'origine $O_i$ ne connaît pas la destination $D_j$ mais uniquement l'information $D_{jit}$ que $D_j$ veut dévoiler à $O_i$. Réciproquement, la destination $D_j$ ne connaît pas l'origine $O_i$ mais uniquement l'information $O_{ijt}$ que $O_i$ veut dévoiler à $D_j$.

Le troisième champ étant :

[Math 21]

$$\text{chiffrement}_{k_{ijt}} \begin{pmatrix} \text{instant} = t & \text{flux} = F_{ijt} \\ \text{origine} = O_{ijt} & \text{destination} = D_{jit} \end{pmatrix}$$

En variante, lorsque $O_{ijt}$ et $D_{jit}$ ne varient pas dans le temps, on peut aussi stocker la courbe de variation de flux pour chaque paire origine-destination, en utilisant une seule clé symétrique $k_{ij}$ plutôt qu'un ensemble de clés $k_{ijt}$. Le troisième champ est alors :

[Math 22]

$$\text{chiffrement}_{k_{ij}}\left(\text{origine} = O_{ij} \,;\, \text{destination} = D_{ji}\,;\, \text{flux} = \left[F_{ijt_1}, F_{ijt_2}, ...\right]\right)$$

L'ensemble de ces triplets d'information est publié conjointement dans {F} par l'acteur A. Cet ensemble comprend par exemple un triplet d'information pour chaque valeur $F_{ijt}$. De manière alternative, seuls les triplets d'information correspondant à des valeurs $F_{ijt}$ non nulles peuvent est publié dans {F}.

Dans le cas où l'ensemble des *m* x n triplets d'information par intervalle de temps n'est pas stocké dans le fichier {F}, il peut être avantageux de rendre public le nombre de triplets dans lequel chaque acteur X est présent comme source ou comme destination.

En comparant la somme de ces nombres et le nombre de triplets dans le fichier, cela permet d'assurer que des triplets d'information n'ont pas été créés avec des acteurs fictifs.

On peut limiter la publication de ces informations aux sources, afin d'assurer l'anonymat total des destinations.

Les informations privées associées au nœud X contenues dans le fichier {F} peuvent permettre à X de retrouver plus facilement les informations qui le concerne, et d'en analyser la validité. La forme de ces informations dépend du format de {F} mais cela peut être un ensemble de numéros de lignes de {F} ou de rangs dans un tableau.

## Validation du flux chiffré

Les nœuds origine et destination participent à la validation des données d'affectation d'énergie chiffrées {F} publiées.

Les nœuds origine et destination peuvent tous, de manière systématique, valider ou invalider les données qui les concernent.

En variante, la validation ou l'invalidation des données peut être systématique uniquement pour les nœuds origine. La validation ou l'invalidation des données peut aussi être systématique uniquement pour les nœuds destination.

En variante encore, la validation ou l'invalidation des données peut ne pas être systématique pour les nœuds origine et destination.

Chaque nœud X peut déléguer son processus de validation à un tiers de confiance ayant un accès aux données confidentielles du nœud X.

Une fois le fichier informatique {F} publié, chaque nœud origine $O_i$ peut retrouver, en déchiffrant {F} à l'aide de sa clé privée PK$^{-1}$($O_i$), l'ensemble F($O_i$) de cardinal #F($O_i$) des triplets d'informations qui correspondent à un flux $F_{ijt}$ originaire de $O_i$.

En déchiffrant le premier champ d'un triplet de F($O_i$), $O_i$ accède à la clé symétrique $k_{ijt}$ qui lui permet alors de déchiffrer $O_{ij}$, $D_{ji}$ et $F_{ijt}$.

L'origine $O_i$ vérifie alors que les informations contenues dans $O_{ijt}$ sont vraies et que, pour l'ensemble des intervalles de temps $\Delta_t$ présents dans le fichier {F}, l'inéquation suivante est vérifiée :

[Math 23]

$$\sum_j F_{ijt} \leq P_{it}$$

Si la vérification se termine par un succès, $O_i$ émet un message signé, par exemple au moyen de sa clé privée, indiquant au moins la référence à {F} et le nombre de triplets vérifiés dans ce fichier.

Ce message signé est envoyé à l'acteur A qui l'archive.

De manière symétrique, chaque destination $D_j$ peut retrouver, en déchiffrant {F} à l'aide de sa clé privée PK$^{-1}$($D_j$), l'ensemble F($D_j$) de cardinal #F($D_j$) des triplets d'information qui correspond à un flux $F_{ijt}$ à destination de $D_j$.

En déchiffrant le premier champ d'un triplet de F($D_j$), $D_j$ accède à la clé symétrique $k_{ijt}$ qui lui permet alors de déchiffrer $O_{ij}$, $D_{ji}$ et $F_{ijt}$.

L'origine Dj vérifie alors que les informations contenues dans $D_{ji}$ sont vraies et que, pour l'ensemble des intervalles de temps $\Delta_t$ présents dans le fichier {F}, l'inéquation suivante est vérifiée :

[Math 24]

$$\sum_i F_{ijt} \leq C_{jt}$$

Si la vérification se termine par un succès, $D_j$ émet un message signé, par exemple au moyen de sa clé privée, indiquant le nombre de lignes vérifiées. Ce message signé est envoyé à l'acteur A qui l'archive.

Enfin, l'acteur A publie l'ensemble des messages signés reçus des sources et des destinations.

Tout nœud, qu'il soit source, destination ou tiers acteur, peut vérifier l'origine des messages en utilisant les clés publiques des origines et des destinations et calculer les sommes suivantes :

[Math 25]

$$\sum_i \#F(O_i) \ et \ \sum_j \#F(D_j)$$

Ces deux sommes doivent être égales au nombre de triplets d'informations du fichier chiffré {F}. Si c'est le cas, on a la preuve que le multiflot d'affectation d'énergie ou de matière énergétique F produite par l'acteur A est un multiflot valide, c'est-à-dire qu'il vérifie les inéquations de (1') et (2').

En variante, seules les nœuds origines envoient un message signé de validation.

Ces messages sont publiés par A.

Il est alors possible de vérifier que la somme suivante est bien égale au nombre de triplets du fichier {F} :

[Math 26]

$$\sum_i \#F(O_i)$$

Cette égalité permet d'assurer que la série d'inégalités suivante est bien vérifiée pour toutes les origines $O_i$ :

[Math 27]

$$\sum_j F_{ijt} \leq P_{it}$$

Cela assure que le multiflot d'affectation d'énergie ou de matière énergétique proposé par A permet bien d'alimenter les destinations.

**Revendications**

1. Procédé de validation d'un multiflot d'affectation d'énergie ou de matière énergétique (F) entre des nœuds $N_i$ d'un réseau d'acteurs disposant de moyens de calcul, ce multiflot comportant des coefficients correspondant à une quantité d'énergie ou d'une matière énergétique de nature $Q_q$ attribuée à un flux virtuel entre des nœuds $N_i$ et $N_j$ du réseau d'acteurs à différents instants, cette quantité d'énergie ou de matière énergétique ayant été produite, stockée, déstockée et/ou consommée au sein du réseau d'acteurs, ce procédé comprenant les étapes, pour un nœud $N_i$ donné :

   • de chiffrement, par au moins un ordinateur, d'au moins les coefficients du multiflot impliquant ce nœud pour obtenir des données chiffrées,
   • de publication par le biais d'un réseau informatique des données chiffrées de façon à permettre à chaque nœud $N_i$ d'émettre en retour un message de validation certifiant le respect d'une condition prédéfinie entre les données du multiflot (F) et des valeurs réelles de production, de niveau de stock ou de consommation observées au niveau du nœud $N_i$,
   • d'enregistrement, dans un dispositif de stockage informatique, des messages de validation envoyés par les nœuds du réseau d'acteurs de façon à permettre la validation des coefficients du multiflot.

2. Procédé selon la revendication 1, la publication s'effectuant sur un registre distribué, notamment un registre basé sur une chaîne de blocs.

3. Procédé selon la revendication 1 ou 2, l'étape de chiffrement étant précédée par une étape de calcul du multiflot d'affectation d'énergie ou de matière énergétique (F), ce calcul s'effectuant par une méthode d'optimisation mathématique, notamment par application d'un algorithme d'optimisation de flux dans les graphes ou, plus généralement, par un algorithme de programmation linéaire ou quadratique, en nombres entiers ou pas, ou par des algorithmes approchés, heuristiques ou méta-heuristiques.

4. Procédé selon l'une quelconque des revendications précédentes, le chiffrement des coefficients du multiflot d'affectation d'énergie ou de matière énergétique (F) étant opéré par une méthode de chiffrement asymétrique.

5. Procédé selon l'une quelconque des revendications précédentes, tous les coefficients du multiflot (F) étant chiffrés lors de l'étape de chiffrement et/ou les données chiffrées étant, en plus des coefficients du multiflot (F), des informations concernant la nature de l'énergie stockée et/ou le lieu de production ou de consommation.

6. Procédé selon l'une quelconque des revendications précédentes, les données chiffrées étant contenues dans un fichier informatique {F}, le fichier informatique {F} contenant notamment un nombre d'éléments d'information égal au nombre de coefficients du multiflot (F) ou le fichier informatique {F} contenant notamment un nombre d'éléments d'information inférieur au nombre de coefficients du multiflot (F), lesdits éléments d'information correspondant aux coefficients du multiflot (F) non nuls, ou le fichier informatique {F} contenant notamment un nombre d'éléments d'information inférieur au nombre de coefficients du multiflot (F), lesdits éléments d'information correspondant aux coefficients du multiflot (F) non nuls plus au moins un élément d'information correspondant à un coefficient du multiflot (F) nul.

7. Procédé selon l'une quelconque des revendications précédentes, l'étape d'enregistrement, dans un dispositif de stockage informatique, d'un message de validation étant suivie d'une étape de publication de ce message de validation sur un registre distribué, notamment un registre basé sur une chaîne de blocs.

8. Procédé selon l'une quelconque des revendications précédentes, tous les nœuds envoyant un message de validation et/ou chaque nœud ($N_i$) du réseau d'acteurs ayant la possibilité d'émettre son message de validation à tout moment ultérieur à la publication des données chiffrées.

9. Procédé de validation de données d'affectation d'énergie ou d'une matière énergétique en lien avec un nœud Ni d'un réseau d'acteurs disposant de moyens de calcul, comprenant les étapes de :

• récupération et déchiffrement d'une version chiffrée de données d'un multiflot d'affectation d'énergie ou de matière énergétique entre ce nœud Ni et le ou les autres nœuds du réseau d'acteurs en lien avec ce nœud,
• envoi d'un message de validation à un destinataire prédéfini si une condition prédéfinie est respectée entre ces données et au moins une valeur réelle de production, de niveau de stock, ou de consommation observée ou mesurée par ce nœud.

10. Procédé selon la revendication précédente, le multiflot étant une table à quatre dimensions i, j, q, et t comportant le calcul des quantités $V_{iqt}$ d'un produit $Q_q$ virtuellement stockée par le nœud $N_i$ à l'instant t à partir de l'équation :

$$V_{iq(t-1)} + \sum_{j=0}^{N} F_{jiqt} - \sum_{j=0}^{N} F_{ijqt} = V_{iqt},$$

$F_{ijqt}$ désignant les coefficients du multiflot (F) représentant la quantité d'énergie ou de matière énergétique du produit $Q_q$ transférée du nœud $N_i$ au nœud $N_j$ entre les instants t-1 et t, ladite condition prédéfinie correspondant au respect des équations suivantes :

$$\sum_q F_{0iqt} \leq P_{it}$$

$$\sum_q F_{i0qt} \leq C_{it}$$

$$\sum_q w_{iq} V_{iqt} \leq K_{it}$$

où $F_{0iqt}$ est la quantité du produit $Q_q$ virtuellement produite par le nœud ($N_i$) entre les instants t-1 et t selon le multiflot d'affectation (F), $F_{i0qt}$ est la quantité du produit $Q_q$ virtuellement consommée par le nœud $N_i$ entre les instants t-1 et t selon le multiflot d'affectation (F), $P_{it}$ et $C_{it}$ sont les valeurs de production et de consommation réelles observées, $\Sigma_q w_{iq} V_{iqt}$ est le niveau de stock global d'énergie et $K_{it}$ est la capacité de stockage du nœud $N_i$ entre les instants t-1 et t.

11. Procédé selon la revendication 9 ou 10, la vérification du respect de la condition prédéfinie entre les données reçues et la valeur réelle de production, de niveau de stock ou de consommation observée, étant faite de manière automatique par un outil logiciel s'interfaçant notamment avec le ou les équipements permettant aux nœuds de récupérer les données de consommation ou de production réelles observées.

12. Procédé selon l'une quelconque des revendications 9 à 11, la récupération d'une version chiffrée des coefficients d'un multiflot d'affectation d'énergie ou de matière énergétique entre ce nœud Ni et le ou les autres nœuds du réseau d'acteurs en lien avec ce nœud étant suivie d'une vérification de l'authenticité de cette version chiffrée.

13. Procédé selon l'une quelconque des revendications 9 à 12, les nœuds du réseau ne stockant pas d'énergie ou de matière énergétique, l'envoi du message de validation étant systématique pour les nœuds de production d'énergie uniquement.

14. Procédé selon l'une quelconque des revendications 9 à 13, les nœuds du réseau ne stockant pas d'énergie ou de matière énergétique, l'envoi du message de validation étant systématique pour les nœuds de consommation d'énergie uniquement.

15. Procédé selon l'une quelconque des revendications précédentes, l'énergie étant transportée physiquement entre les nœuds (N<sub>i</sub>) du réseau d'acteurs sous forme d'électricité et/ou la matière énergétique étant du gaz.

**Patentansprüche**

1. Verfahren zur Validierung einer Mehrfachströmung zur Zuordnung von Energie oder Energiematerial (F) zwischen Knoten $N_i$ eines Netzes von Akteuren, die über Rechenmittel verfügen, wobei diese Mehrfachströmung Koeffizienten umfasst, die einer Menge von Energie oder eines Energiematerials der Art $Q_q$ entsprechen, die einem virtuellen Fluss zwischen Knoten $N_i$ und $N_j$ des Netzes von Akteuren zu verschiedenen Zeitpunkten zugeordnet werden, wobei diese Menge von Energie oder Energiematerial innerhalb des Netzes von Akteuren erzeugt, gespeichert, ausgespeichert und/oder verbraucht worden ist, wobei dieses Verfahren für einen gegebenen Knoten $N_i$ die folgenden Schritte umfasst:

   • Verschlüsseln mindestens der Koeffizienten der Mehrfachströmung, die diesen Knoten einbezieht, durch mindestens einen Computer, um verschlüsselte Daten zu erhalten,
   • Veröffentlichen der verschlüsselten Daten über ein Computernetz, um jedem Knoten $N_i$ zu ermöglichen, im Gegenzug eine Validierungsnachricht zu senden, die die Erfüllung einer vordefinierten Bedingung zwischen den Daten der Mehrfachströmung (F) und realen Werten der Erzeugung, des Speicherniveaus oder des Verbrauchs, die am Knoten $N_i$ beobachtet werden, bestätigen,
   • Speichern der Validierungsnachrichten, die von den Knoten des Netzes von Akteuren gesendet werden, in einer Datenspeichervorrichtung, so dass die Validierung der Koeffizienten der Mehrfachströmung ermöglicht wird.

2. Verfahren nach Anspruch 1, wobei das Veröffentlichen auf einem verteilten Register erfolgt, insbesondere einem Register, das auf einer Blockchain basiert.

3. Verfahren nach Anspruch 1 oder 2, wobei dem Schritt des Verschlüsselns ein Schritt des Berechnens der Mehrfachströmung zur Zuordnung von Energie oder Energiematerial (F) vorausgeht, wobei dieses Berechnen durch ein mathematisches Optimierungsverfahren erfolgt, insbesondere durch Anwendung eines Algorithmus zur Optimierung des Flusses in den Graphen oder allgemeiner durch einen Algorithmus mit linearer oder quadratischer Programmierung, in Ganzzahlen oder nicht oder durch angenäherte, heuristische oder metaheuristische Algorithmen.

4. Verfahren nach einem der vorhergehenden Ansprüche, wobei das Verschlüsseln der Koeffizienten der Mehrfachströmung zur Zuordnung von Energie oder Energiematerial (F) durch ein asymmetrisches Verschlüsselungsverfahren durchgeführt wird.

5. Verfahren nach einem der vorhergehenden Ansprüche, wobei alle Koeffizienten der Mehrfachströmung (F) im Schritt des Verschlüsselns verschlüsselt werden und/oder die verschlüsselten Daten zusätzlich zu den Koeffizienten der Mehrfachströmung (F) Informationen über die Art der gespeicherten Energie und/oder den Ort der Erzeugung oder des Verbrauchs sind.

6. Verfahren nach einem der vorhergehenden Ansprüche, wobei die verschlüsselten Daten in einem Datenordner {F} enthalten sind, wobei der Datenordner {F} insbesondere eine Anzahl von Informationselementen enthält, die gleich der Anzahl von Koeffizienten der Mehrfachströmung (F) ist, oder der Datenordner {F} insbesondere eine Anzahl von Informationselementen enthält, die kleiner als die Anzahl von Koeffizienten der Mehrfachströmung (F) ist, wobei die Informationselemente den Koeffizienten der Mehrfachströmung (F), die nicht null sind, entsprechen, oder der Datenordner {F} insbesondere eine Anzahl von Informationselementen enthält, die kleiner als die Anzahl von Koeffizienten der Mehrfachströmung (F) ist, wobei die Informationselemente den Koeffizienten der Mehrfachströmung (F), die nicht null sind, plus mindestens einem Informationselement entsprechen, das einem Koeffizienten der Mehrfachströmung (F), der null ist, entspricht.

7. Verfahren nach einem der vorhergehenden Ansprüche, wobei dem Schritt des Speicherns einer Validierungsnachricht in einer Datenspeichervorrichtung ein Schritt des Veröffentlichens dieser Validierungsnachricht auf einem verteilten Register nachfolgt, insbesondere einem Register basierend auf einer Blockchain.

8. Verfahren nach einem der vorhergehenden Ansprüche, wobei alle Knoten eine Validierungsnachricht senden und/oder jeder Knoten ($N_i$) des Netzes von Akteuren die Möglichkeit hat, seine Validierungsnachricht zu jedem Zeitpunkt nach der Veröffentlichung der verschlüsselten Daten zu senden.

9. Verfahren zur Validierung von Daten der Zuordnung von Energie oder eines Energiematerials in Verbindung mit einem Knoten Ni eines Netzes von Akteuren, das über Rechenmittel verfügt, umfassend die Schritte:

• Wiederherstellen und Entschlüsseln einer verschlüsselten Version von Daten einer Mehrfachströmung zur Zuordnung von Energie oder Energiematerial zwischen diesem Knoten Ni und dem oder den anderen Knoten des Netzes von Akteuren in Verbindung mit diesem Knoten,
• Senden einer Validierungsnachricht an einen vordefinierten Empfänger, wenn eine vordefinierte Bedingung zwischen diesen Daten und mindestens einem realen Wert der Erzeugung, des Speicherniveaus oder des Verbrauchs, der von diesem Knoten beobachtet oder gemessen wird, erfüllt ist.

10. Verfahren nach dem vorhergehenden Anspruch, wobei die Mehrfachströmung eine Tabelle mit vier Dimensionen i, j, q und t ist, die die Berechnung der Mengen $V_{iqt}$ eines Produkts $Q_q$, das vom Knoten $N_i$ zum Zeitpunkt t virtuell gespeichert wird, anhand der folgenden Gleichung umfasst:

$$V_{iq(t-1)} + \sum_{j=0}^{N} F_{jiqt} - \sum_{j=0}^{N} F_{jiqt} = V_{iqt},$$

wobei $F_{ijqt}$ die Koeffizienten der Mehrfachströmung (F) bezeichnet, die die Menge von Energie oder Energiematerial des Produkts $Q_q$ repräsentieren, die zwischen den Zeitpunkten t-1 und t vom Knoten $N_i$ an den Knoten $N_j$ übertragen wird, wobei die vordefinierte Bedingung der Erfüllung der folgenden Gleichungen entspricht:

$$\sum_{q} F_{0iqt} \leq P_{it}$$

$$\sum_{q} F_{i0qt} \leq C_{it}$$

$$\sum_{q} W_{iq} V_{iqt} \leq K_{it}$$

wobei $F_{0iqt}$ die Menge des Produkts $Q_q$ ist, die zwischen den Zeitpunkten t-1 und t gemäß der Mehrfachströmung zur Zuordnung (F) virtuell erzeugt wird, $F_{i0qt}$ die Menge des Produkts $Q_q$ ist, die zwischen den Zeitpunkten t-1 und t gemäß der Mehrfachströmung zur Zuordnung (F) virtuell verbraucht wird, $P_{it}$ und $C_{it}$ die beobachteten realen Werte der Erzeugung und des Verbrauchs sind, $\Sigma_q w_{iq} V_{iqt}$ das Energie-Gesamtspeicherniveau ist und $K_{it}$ die Speicherkapazität des Knotens $N_i$ zwischen den Zeitpunkten t-1 und t ist.

11. Verfahren nach Anspruch 9 oder 10, wobei die Verifizierung der Erfüllung der vordefinierten Bedingung zwischen den empfangenen Daten und dem beobachteten realen Wert der Erzeugung, des Speicherniveaus oder des Verbrauchs automatisch durch ein Softwarewerkzeug erfolgt, das sich insbesondere mit der oder den Einrichtungen verbindet, die es den Knoten ermöglichen, die beobachteten realen Daten des Verbrauchs oder der Erzeugung wiederherzustellen.

12. Verfahren nach einem der Ansprüche 9 bis 11, wobei der Wiederherstellung einer verschlüsselten Version der Koeffizienten einer Mehrfachströmung zur Zuordnung von Energie oder Energiematerial zwischen diesem Knoten Ni und dem oder den anderen Knoten des Netzes von Akteuren in Verbindung mit diesem Knoten eine Verifizierung der Authentizität dieser verschlüsselten Version nachfolgt.

13. Verfahren nach einem der Ansprüche 9 bis 12, wobei die Knoten des Netzes keine Energie oder kein Energiematerial speichern und das Senden der Validierungsnachricht nur für die Energieerzeugungsknoten systematisch ist.

**14.** Verfahren nach einem der Ansprüche 9 bis 13, wobei die Knoten des Netzes keine Energie oder kein Energiematerial speichern und das Senden der Validierungsnachricht nur für die Energieverbrauchsknoten systematisch ist.

**15.** Verfahren nach einem der vorhergehenden Ansprüche, wobei die Energie physisch zwischen den Knoten ($N_i$) des Netzes von Akteuren in Form von Elektrizität transportiert wird und/oder das Energiematerial Gas ist.

**Claims**

**1.** Method for validating an energy or energetic material assignment multi-flow (F) between nodes $N_i$ of a network of actors having computing means, this multi-flow comprising coefficients corresponding to a quantity of energy or of an energetic material of nature $Q_q$ assigned to a virtual flow between nodes $N_i$ and $N_j$ of the network of actors at various times, this quantity of energy or of energetic material having been produced, stored, de-stored and/or consumed within the network of actors, this method comprising the following steps, for a given node $N_i$:

  • at least one computer encrypting at least the coefficients of the multi-flow involving this node in order to obtain encrypted data,
  • publishing the encrypted data via a computer network, so as to enable each node $N_i$ to transmit back a validation message certifying compliance with a predefined condition between the data of the multi-flow (F) and real values concerning production, stock level or consumption observed at the node $N_i$,
  • recording, in a computer storage device, validation messages sent by the nodes of the network of actors so as to enable validation of the coefficients of the multi-flow.

**2.** Method according to Claim 1, the publication taking place to a distributed register, in particular a blockchain-based register.

**3.** Method according to Claim 1 or 2, the encryption step being preceded by a step of calculating the energy or energetic material assignment multi-flow (F), this calculation being carried out using a mathematical optimization method, in particular by applying a graph flow optimization algorithm or, more generally, using an integer or non-integer linear or quadratic programming algorithm, or using approximated heuristic or meta-heuristic algorithms.

**4.** Method according to any one of the preceding claims, the coefficients of the energy or energetic material assignment multi-flow (F) being encrypted using an asymmetric encryption method.

**5.** Method according to any one of the preceding claims, all the coefficients of the multi-flow (F) being encrypted in the encryption step and/or the encrypted data being, in addition to coefficients of the multi-flow (F), information concerning the nature of the stored energy and/or the place of production or consumption.

**6.** Method according to any one of the preceding claims, the encrypted data being contained in a computer file {F}, the computer file {F} containing in particular a number of information elements equal to the number of coefficients of the multi-flow (F) or the computer file {F} containing in particular a number of information elements less than the number of coefficients of the multi-flow (F), said information elements corresponding to the non-zero coefficients of the multi-flow (F), or the computer file {F} containing in particular a number of information elements less than the number of coefficients of the multi-flow (F), said information elements corresponding to the non-zero coefficients of the multi-flow (F) plus at least one information element corresponding to a zero coefficient of the multi-flow (F) .

**7.** Method according to any one of the preceding claims, the step of recording a validation message in a computer storage device being followed by a step of publishing this validation message to a distributed register, in particular a blockchain-based register.

**8.** Method according to any one of the preceding claims, all the nodes sending a validation message and/or each node ($N_i$) of the network of actors having the possibility of transmitting its validation message at any time following the publication of the encrypted data.

**9.** Method for validating energy or energetic material assignment data in connection with a node Ni of a network of actors having computing means, comprising the following steps:

  • recovering and decrypting an encrypted version of data from an energy or energetic material assignment multi-flow between this node Ni and the one or more other nodes of the network of actors in connection with this node,
• sending a validation message to a predefined recipient if a predefined condition is met between these data and at least one real value concerning production, stock level or consumption observed or measured by this node.

**10.** Method according to the preceding claim, the multi-flow being a table with four dimensions i, j, q, and t, comprising calculating quantities $V_{iqt}$ of a product $Q_q$ virtually stored by the node $N_i$ at the time t using the equation:

$$V_{iq(t-1)} + \sum_{j=0}^{N} F_{jiqt} - \sum_{j=0}^{N} F_{jiqt} = V_{iqt},$$

$F_{ijqt}$ designating the coefficients of the multi-flow (F) representing the quantity of energy or of energetic material of the product $Q_q$ transferred from the node $N_i$ to the node $N_j$ between the times t-1 and t, said predefined condition corresponding to compliance with the following equations:

$$\sum_{q} F_{0iqt} \leq P_{it}$$

$$\sum_{q} F_{i0qt} \leq C_{it}$$

$$\sum_{q} W_{iq} V_{iqt} \leq K_{it}$$

where $F_{0iqt}$ is the quantity of the product $Q_q$ virtually produced by the node ($N_i$) between the times t-1 and t according to the assignment multi-flow (F), $F_{i0qt}$ is the quantity of the product $Q_q$ virtually consumed by the node $N_i$ between the times t-1 and t according to the assignment multi-flow (F), $P_{it}$ and $C_{it}$ are the observed real production and consumption values, $\Sigma_q w_{iq} V_{iqt}$ is the overall energy stock level and $K_{it}$ is the storage capacity of the node $N_i$ between the times t-1 and t.

**11.** Method according to Claim 9 or 10, compliance with the predefined condition between the received data and the observed real value concerning production, stock level or consumption being verified automatically by a software tool interfacing in particular with the one or more items of equipment allowing the nodes to recover the observed real consumption or production data.

**12.** Method according to any one of Claims 9 to 11, the recovery of an encrypted version of the coefficients of an energy or energetic material assignment multi-flow between this node Ni and the one or more other nodes of the network of actors in connection with this node being followed by verification of the authenticity of this encrypted version.

**13.** Method according to any one of Claims 9 to 12, the nodes of the network not storing energy or energetic material, the validation message being sent systematically for energy generation nodes only.

**14.** Method according to any of Claims 9 to 13, the nodes of the network not storing energy or energetic material, the validation message being sent systematically for energy consumption nodes only.

**15.** Method according to any one of the preceding claims, the energy being physically transported between the nodes ($N_i$) of the network of actors in the form of electricity and/or the energetic material being gas.

[Fig 2]

[Fig 1]

[Fig 3]

```
┌─────────────────┐
│  Calcul de F    │ (11)
└─────────────────┘
         │
         ▼
┌─────────────────┐
│ Chiffrement de F│ (12)
└─────────────────┘
         │
         ▼
┌─────────────────┐
│ Publication de F│ (13)
└─────────────────┘
         │
         ▼
┌─────────────────┐
│ Enregistrement des│
│   messages de   │ (14)
│   validation    │
└─────────────────┘
         │
         ▼
┌─────────────────┐
│ Validation de F │ (15)
└─────────────────┘
```

# Fig. 3

[Fig 4]

|  | | (21) | | (22) |
| --- | --- | --- | --- | --- |
|  | | Validation | | Erreur |

| Heure / Source | 0 | 1 | ... | 23 |
| --- | --- | --- | --- | --- |
| Source de Production 1 | 100 | 100 | | 100 |
| Source de Production 2 | 100 | | | 100 |

# Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017199053 A